# EUROPEAN PATENT APPLICATION

(11) **EP 4 745 271 A1**
(43) Date of publication of application: **20.05.2026**
(21) Application number: 25196590.1
(22) Date of filing: 19.08.2025
(51) Int. Cl.: C25B 3/09, C25B 3/25, C25B 3/26, C25B 9/19, C25B 11/031, C25B 11/053, C25B 1/04

(54) **MEMBRANE ELECTRODE ASSEMBLY, ELECTROLYSIS CELL, AND ELECTROLYSIS DEVICE**

(30) Priority: 15.11.2024 JP 2024200132
(71) Applicant: KABUSHIKI KAISHA TOSHIBA, Kawasaki-shi, Kanagawa (JP)
(72) Inventor: Yonetsu, Maki, Kawasaki-shi, Kanagawa (JP); Kiyota, Yasuhiro, Kawasaki-shi, Kanagawa (JP); Kofuji, Yusuke, Kawasaki-shi, Kanagawa (JP); Inoue, Yusuke, Kawasaki-shi, Kanagawa (JP); Kudo, Yuki, Kawasaki-shi, Kanagawa (JP); Mikoshiba, Satoshi, Kawasaki-shi, Kanagawa (JP); Kitagawa, Ryota, Kawasaki-shi, Kanagawa (JP)
(74) Representative: Hoffmann Eitle

(57) **Abstract**

A membrane electrode assembly includes: a cathode that is arranged to be in contact with a reducible substance and reduces the reducible substance; an anode that is arranged to be in contact with an electrolytic solution containing an oxidizable substance and oxidizes the oxidizable substance; a diaphragm separating the cathode and the anode; and a layer that is provided between the anode and the diaphragm, has an inorganic material, and reduces a surface unevenness of the anode. An average pore size of the layer is smaller than an average pore size of the anode.

## Description

### FIELD

Arrangements described herein relate generally to a membrane electrode assembly, an electrolysis cell, and an electrolysis device.

### BACKGROUND

In recent years, it has been desired, from viewpoints of both energy problems and environmental problems, not only to convert renewable energy, such as sunlight, into electric energy and use it but also to store the energy and convert it into a conveyable state. In response to these demands, research and development of power-to-chemical technology, which uses sunlight to produce chemical substances like photosynthesis by plants, is underway. With this technology, it becomes possible to store the renewable energy as a storable fuel, or the like, and it is expected to produce chemical substances becoming industrial raw materials to thereby create value.

As an apparatus that produces the chemical substances using the renewable energy, such as sunlight, a carbon dioxide electrolysis device that reduces carbon dioxide (CO₂) generated from, for example, a power plant or a garbage furnace is known. The CO₂ electrolysis device includes a cathode (reduction electrode), which reduces CO₂ to produce carbon compounds such as carbon monoxide (CO), and an anode (oxidation electrode), which oxidizes water (H₂O) and hydroxide ions (OH⁻). In such a carbon dioxide electrolysis device, it is effective to apply a cell structure (electrolysis cell) in which the cathode and anode are stacked through a diaphragm such as an ion-exchange membrane or porous membrane, and CO₂ can be supplied directly to a cathode catalyst layer of the electrolysis cell to quickly progress the CO₂ reduction reaction.

### SUMMARY

A membrane electrode assembly of an arrangement includes a cathode that is arranged in contact with a reducible substance and reduces the reducible substance, an anode that is arranged in contact with an electrolytic solution containing an oxidizable substance and oxidizes the oxidizable substance, a diaphragm separating the cathode and anode, and a layer that is provided between the anode and the diaphragm, has an inorganic material, and reduces a surface unevenness of the anode. An average pore size of the layer is smaller than an average pore size of the anode.

### BRIEF DESCRIPTION OF THE DRAWINGS

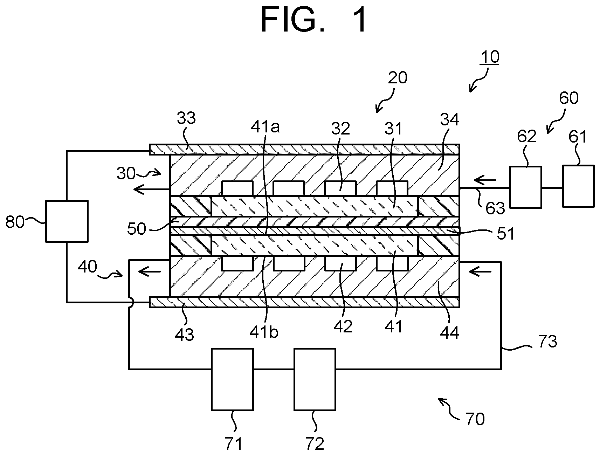

FIG. 1 is a view illustrating an example of an electrolysis device of an arrangement.

### DETAILED DESCRIPTION

An electrolysis cell of an arrangement and an electrolysis device using the electrolysis cell will be explained below with reference to the drawings. In each arrangement, substantially the same components are denoted by the same reference signs, and the explanation thereof will be partially omitted in some cases. The drawings are schematic, in which the relationship between the thickness and planar dimensions, a thickness ratio among the components, and so on may be different from actual ones.

In the following, an example in which the electrolysis cell and electrolysis device of the arrangement are applied to a carbon dioxide electrolysis cell and electrolysis device is mainly described, but the electrolysis cell and electrolysis device of the arrangement are not limited thereto. The electrolysis cell and electrolysis device of the arrangement may be applied to an electrolysis cell and electrolysis device that electrolyze nitrogen (N₂) to produce ammonia (NH₃), for example. It is also applicable to water electrolysis devices and fuel cells.

FIG. 1 is a sectional view illustrating a carbon dioxide (CO₂) electrolysis device 10 of an arrangement. The CO₂ electrolysis device 10 illustrated in FIG. 1 includes an electrolysis cell 20. The electrolysis cell 20 includes a cathode part 30, an anode part 40, and a diaphragm 50 arranged to separate them.

The cathode part 30 includes a cathode (reduction electrode) 31 with a metal catalyst layer, a cathode flow path 32, and a cathode current collector 33. The cathode flow path 32 is a flow path that supplies a reducible substance (a substance to be reduced) to the cathode 31 and is formed by pits (grooves) provided at a cathode flow path plate 34. Examples of the reducible substance include CO₂ gas. The cathode 31 is arranged to be in contact with CO₂ flowing in the cathode flow path 32. The anode part 40 includes an anode (oxidation electrode) 41, an anode flow path 42, and an anode current collector 43. The anode flow path 42 is an electrolytic solution flow path that supplies an electrolytic solution as an anode solution to the anode 41 and is formed by pits (grooves) provided at an anode flow path plate 44. The electrolytic solution contains water (H₂O) or hydroxide ions (OH⁻) as an oxidizable substance (a substance to be oxidized). The anode 41 is arranged to be in contact with the anode solution flowing in the anode flow path 42.

The CO₂ electrolysis device 10 includes a gas supply part 60 that supplies CO₂ to the electrolysis cell 20, and an electrolytic solution supply part (supply system) 70 that supplies the anode solution to the electrolysis cell 20. The gas supply part 60 includes a CO₂ storage part 61, such as a CO₂ gas cylinder, and a CO₂ adjustment part 62 that adjusts a flow rate of the CO₂ gas, and supplies the CO₂ gas from the CO₂ storage part 61 to the cathode flow path 32 through a gas pipe 63. The gas supply part 60 may include a humidifying part that humidifies the CO₂ gas. The CO₂ gas supplied to the cathode flow path 32 is not limited to single gas of CO₂ but may be gas that is mainly composed of CO₂ (for example, gas that contains 90 vol% or more CO₂). In the cathode 31 of the electrolysis cell 20 illustrated in FIG. 1, ions are supplied through the diaphragm 50, and the CO₂ gas is supplied from the cathode flow path 32. CO₂ reduction products are mainly discharged from the cathode flow path 32.

The electrolytic solution supply part 70 includes an anode solution tank 71 and a pump 72, and supplies the anode solution from the anode solution tank 71 to the anode flow path 42 through the pump 72 and an electrolytic solution pipe 73. The electrolytic solution supply part 70 may have an anode solution concentration measuring part. The anode solution circulates through the anode flow path 42 and the electrolytic solution pipe 73. The cathode current collector 33 and anode current collector 43 in the CO₂ electrolysis device 10 are connected to a power source 80. It is preferable to use a material with low chemical reactivity and high electrical conductivity for the anode flow path plate 44, which forms the anode flow path 42, and the cathode flow path plate 34, which forms the cathode flow path 32. Such materials include metal materials such as Ti and SUS, carbon, or other materials.

The electrolysis cell 20 is generally sandwiched between a pair of support plates (not illustrated) and further tightened with bolts or the like. The power source 80 connected to the cathode current collector 33 and anode current collector 43 is not limited to ordinary commercial power sources, batteries, or the like, but may also be a power source that converts and supplies renewable energy into electric energy. Examples of such power sources include power sources that convert kinetic energy or positional energy such as wind, hydraulic, geothermal, and tidal power into the electric energy, power sources such as solar cells such as photoelectric conversion elements that convert light energy into the electric energy, power sources such as fuel cells and storage batteries that convert chemical energy into the electric energy, and power sources such as devices that convert vibration energy, such as sounds, into the electric energy. The use of renewable energy sources is environmentally preferable in combination with the effective use of carbon dioxide.

The cathode 31 is an electrode (reduction electrode) for causing a reduction reaction of carbon dioxide (CO₂) as reducible gas to produce carbon compounds such as carbon monoxide (CO), methane (CH₄), ethane (C₂H₆), ethylene (C₂H₄), methanol (CH₃OH), ethanol (C₂H₅OH), and ethylene glycol (C₂H₆O₂). In the cathode 31, a side reaction to generate hydrogen (H₂) through a reduction reaction of water (H₂O) sometimes occurs in addition to the reduction reaction of carbon dioxide (CO₂). The cathode 31 has a first surface in contact with the diaphragm 50 and a second surface facing the cathode flow path 32. The first surface of the cathode 31 is in contact with one surface of the diaphragm 50.

The cathode flow path 32, which is a flow path for gas containing CO₂ (hereinafter referred to as CO₂ gas), is formed by pits (grooves/recesses) provided at the cathode flow path plate 34. The cathode flow path plate 34 is provided with an inlet and outlet of gas, which are not illustrated in the figure. The CO₂ gas is introduced from the gas supply part 60 through the gas inlet or gas outlet. Furthermore, reaction product gas containing CO, H₂, or other gases is discharged through the gas inlet or gas outlet, and the discharged gas is sent to a valuable material production part, not illustrated, or recovered in a product recovery part. The cathode flow path plate 34 and the cathode flow path 32 provided thereon are in contact with the second surface of the cathode 31 opposite the first surface in contact with the diaphragm 50.

The cathode 31 has a porous structure, for example, such as a mesh material, a punched material, a porous body, and a metal fiber sintered compact, that enables move of ions and water between the diaphragm 50 and the cathode flow path 32. The cathode 31 preferably includes a porous base material containing carbon fibers, and a gas diffusion layer and a catalyst layer provided in sequence on the porous base material. A catalyst material that forms the catalyst layer of the cathode 31 may have nanoparticles, nanostructures, nanowires, or the like to enhance the reduction reaction. The nanostructure is a structure with nanoscale irregularities on a surface of the catalyst material or other materials. The porous base material is arranged on the cathode flow path 32 side, and the cathode catalyst layer is arranged on the diaphragm 50 side. The cathode catalyst layer may intrude into the gas diffusion layer. Thus, the cathode 31 has a porous structure. At least one of the porous base material, the gas diffusion layer, and the catalyst layer may have water repellency by forming a surface covered with a fluorocarbon resin such as Teflon (registered trademark) as a water-repellent agent. This is because a phenomenon of water clogging (flooding) in a porous material occurs due to move of humidification water or the electrolytic solution, which may degrade characteristics of the electrolysis cell 20.

The cathode catalyst layer preferably has catalyst nanoparticles, catalyst nanostructures, or the like. The porous base material is composed of, for example, carbon paper, carbon cloth, or the like, and is preferably subjected to a water-repellent treatment. The cathode catalyst layer is supplied with ions from the anode 41 through the diaphragm 50. The porous base material is supplied with CO₂ gas from the cathode flow path 32, and products of the CO₂ gas reduction reaction are discharged therefrom. The CO₂ reduction reaction occurs at a three-phase boundary of the cathode catalyst layer, and the gaseous products are discharged from the cathode flow path 32.

The cathode catalyst layer of the cathode 31 is preferably formed by a catalyst material (cathode catalyst material) that is capable of reducing CO₂ to produce carbon compounds and decreasing an overvoltage of such a reaction. Examples of the cathode catalyst material include metals such as gold (Au), silver (Ag), copper (Cu), platinum (Pt), palladium (Pd), nickel (Ni), cobalt (Co), iron (Fe), manganese (Mn), titanium (Ti), cadmium (Cd), zinc (Zn), indium (In), gallium (Ga), lead (Pb), and tin (Sn), metal materials such as alloys and intermetallic compounds containing at least one of the metals, carbon materials such as carbon (C), graphene, CNT (carbon nanotube), fullerene, and ketjen black, and metal complexes such as a Ru complex and a Re complex. Various shapes such as a plate shape, a mesh shape, a wire shape, a particle shape, a porous shape, a thin-film shape, or an island shape can be applied to the cathode catalyst layer.

The anode 41 is an electrode that causes the oxidation reaction of water (H₂O) in the anode solution to produce oxygen (O₂) and hydrogen ions (H⁺), or the oxidation reaction of hydroxide ions (OH⁻) generated in the cathode part 30 to produce oxygen and water. The anode 41 is arranged between the diaphragm 50 and the anode flow path 42, in contact with them. That is, the anode 41 has a first surface facing the diaphragm 50 and a second surface facing the anode flow path 42. The first surface of the anode 41 may be in close contact with the diaphragm 50. A solution inlet and a solution outlet (both not illustrated) are connected to the anode flow path plate 44, and the anode solution is introduced and discharged by the pump 72 through these solution inlet and solution outlet. The anode solution flows through the inside of the anode flow path 42 in a manner to be in contact with the anode 41. The anode current collector 43 is in electrical contact with a surface of the anode flow path plate 44, which forms the anode flow path 42, opposite to the anode 41.

When an aqueous solution of an electrolyte is used as the anode solution, the anode 41 is preferably mainly formed by a catalyst material (anode catalyst material) that is capable of oxidizing water (H₂O) to produce oxygen and hydrogen ions, or oxidizing hydroxide ions (OH⁻) to produce water or oxygen, and decreasing an overvoltage of such a reaction. Examples of the catalyst material include metals such as platinum (Pt), palladium (Pd), and nickel (Ni), alloys and intermetallic compounds containing those metals, binary metal oxides such as manganese oxide (Mn-O), iridium oxide (Ir-O), nickel oxide (Ni-O), cobalt oxide (Co-O), iron oxide (Fe-O), tin oxide (Sn-O), indium oxide (In-O), ruthenium oxide (Ru-O), lithium oxide (Li-O), and lanthanum oxide (La-O), ternary metal oxides such as Ni-Co-O, Ni-Fe-O, La-Co-O, Ni-La-O, and Sr-Fe-O, quaternary metal oxides such as Pb-Ru-Ir-O and La-Sr-Co-O, and metal complexes such as a Ru complex and a Fe complex.

The anode 41 includes a base material (porous base material) having a structure capable of moving the anode solution and ions between the diaphragm 50 and the anode flow path 42, for example, a porous structure such as a mesh material, a punched material, a porous sintered compact as an anode base material. The porous base material can be, for example, an aggregate or sintered compact of particles, or an aggregate or sintered compact of fibers. When the porous base material, as described above, is used for the anode base material, the structure will have large surface unevenness.

The porous body, which is the anode base material, has a surface 41a provided on the diaphragm 50 side and a surface 41b provided on the anode flow path 42 side, which is an opposite side of the surface 41a. The anode base material is preferably an aggregate formed by at least one of inorganic particles and inorganic fibers. Here, particles include not only nearly spherical particles (spherical particles or substantially spherical particles), but also rugby ball-shaped, fibrous, needle-shaped, and other shaped particles, and there are no restrictions on shape. In this case, not only can the surface roughness of the anode 41 be decreased, but it is also less likely to cause protrusions in the porous body, further decreasing unevenness described below. The conductive particles preferably contain at least one metal element selected from the group consisting of carbon (C), indium (In), tin (Sn), zinc (Zn), aluminum (Al), copper (Cu), titanium (Ti), nickel (Ni), silver (Ag), tungsten (W), cobalt (Co), and gold (Au).

An average diameter of the particles and fibers is preferably 10 nm or more and 200 µm or less, more preferably 50 nm or more and 150 µm or less, and further preferably 100 nm or more and 100 µm or less. When the average diameter is too large, voids inside the anode 41 become larger, and bubbles of oxygen and other produced gases become trapped and difficult to escape, which is undesirable because an electrolysis voltage (cell voltage) increases. When the average diameter is too small, it is undesirable because the porous body becomes dense, resulting in poor permeation of the electrolytic solution and an increase in the electrolysis voltage.

The material of the anode base material is preferably formed by conductive materials. In addition, it is preferably formed by Ti base materials such as Ti and Ti alloys, which are less reactive, but not limited thereto. Examples of the anode base material include carbon materials such as carbon black, activated carbon, fullerene, carbon nanotubes, graphene, ketjen black, and diamond, indium tin oxide (ITO), zinc oxide (ZnO), fluorine-doped tin oxide (FTO), aluminum-doped zinc oxide (AZO), antimony-doped tin oxide (ATO) and other transparent conductive oxides, metals such as copper, aluminum, titanium, nickel, silver, tungsten, cobalt, and gold, and alloys containing at least one of these metals are preferred because of their high conductivity. An element preferably consists of at least one of C, In, Sn, Zn, Al, Cu, Ti, Ni, Ag, W, Co, and Au. The element more preferably consists of Ti, which is less reactive and stable, among the above.

Examples of the oxidation catalyst provided at the anode base material include ruthenium (Ru), iridium (Ir), platinum (Pt), cobalt (Co), nickel (Ni), iron (Fe), manganese (Mn), lanthanum (La), lithium (Li), indium (In), tantalum (Ta), zirconium (Zr), tin (Sn), titanium (Ti), and other metals and metal oxides, binary metal oxides, ternary metal oxides, quaternary metal oxides, or the like. Examples are manganese oxide (Mn-O), iridium oxide (Ir-O), nickel oxide (Ni-O), cobalt oxide (Co-O), iron oxide (Fe-O), tin oxide (Sn-O), indium oxide (In-O), ruthenium oxide (Ru-O), nickel-iron oxide (Ni-Fe-O), nickel-cobalt oxide (Ni-Co-O), lanthanum-cobalt oxide (La-Co-O), nickel-lanthanum oxide (Ni-La-O), strontium-iron oxide (Sr-Fe-O), lead-ruthenium-iridium oxide (Pb-Ru-Ir-O), lanthanum-strontium-cobalt oxide (La-Sr-Co-O), and the like. Not limited to these materials, the oxidation catalyst may be formed using metal hydroxides containing metals such as cobalt, nickel, iron, and manganese, metal complexes such as a ruthenium complex and an iron complex. The oxidation catalyst may be formed by mixing a plurality of materials. It is preferred that at least one of the elements Ir, Ru, Ni, Fe, Co, Mn, La, Li, In, Sn, and Ti is contained to make a highly active catalyst.

The anode base material forming the anode 41 and the oxidation catalyst need only be at least partially in contact with each other, and a form thereof is not limited. On the other hand, the oxidation catalyst is more preferably in such a form that it is coated on an entire surface of the anode base material. In this case, it is preferable because the surface of the anode base material can be widely used and adhesion between the oxidation catalyst and the anode base material is improved, resulting in a highly active anode 41 and decreasing the electrolysis voltage. When the oxidation catalyst is pre-coated and adhered to the anode base material, it is preferred because the oxidation catalyst is less likely to peel off from the anode base material and will not fill the pores of the diaphragm 50 when the diaphragm 50 is a porous membrane. The oxidation catalyst may be coated on the surface 41a. The material of the oxidation catalyst preferably has a shape such as nanoparticles, nanostructures, or nanowires to enhance the oxidation reaction. The nanostructure is a structure with nanoscale irregularities on the surface of the catalyst material.

A porosity of the anode 41 is preferably 10% or more and 60% or less. When the porosity is too small, the material becomes a dense porous body, which is undesirable because the permeation of the electrolytic solution becomes poor, and the electrolysis voltage increases. When the porosity is too large, conductivity decreases, and the electrolysis voltage increases. It is also undesirable because in such cases, an amount of the electrolytic solution moving across the anode 41 from the anode flow path 42 increases, resulting in that the cathode 31 is excessively covered with the electrolytic solution, and a reaction in which hydrogen is subsidiary produced (side reaction) becomes dominant over the reduction reaction of target raw material gas. The porosity is more preferably 10% or more and 55% or less, and further preferably 10% or more and 50% or less. The porosity is concretely determined using X-ray CT and accompanying software. For example, a volume of the anode 41 is calculated from a thickness and area, and the porosity is calculated from a weight and specific gravity of constituent materials of the anode 41. A maximum peak in a pore size distribution of the anode 41 is preferably 0.1 µm or more and 100 µm or less.

A thickness of the anode 41 is preferably 40 µm or more and 500 µm or less. When the anode 41 is too thin, it is undesirable because mechanical strength of the anode 41 decreases. When the anode 41 is too thick, it is undesirable because bubbles of oxygen and other produced gases are difficult to escape, and the electrolysis voltage increases. The thickness of the anode 41 is more preferably 40 µm or more and 400 µm or less, and further preferably 40 µm or more and 300 µm or less. For example, the thickness can be measured concretely by using a micrometer to measure thicknesses of four corners and a center of the anode 41 to be used and then calculating an average value.

An electrolytic solution, such as an aqueous solution containing any electrolyte, can be used as the anode solution. Examples of the aqueous solution containing the electrolyte include aqueous solutions containing phosphate ions (PO₄²⁻), borate ions (BO₃³⁻), sodium ions (Na⁺), potassium ions (K⁺), calcium ions (Ca²⁺), lithium ions (Li⁺), cesium ions (Cs⁺), magnesium ions (Mg²⁺), chloride ions (Cl⁻), hydrogen carbonate ions (HCO₃⁻), carbonate ions (CO₃²⁻), and so on. The pH of the anode solution is not limited, but considering the environment of use, the pH is preferably 6 or more and 10 or less. Furthermore, the anode solution is more preferably an alkaline solution containing HCO₃⁻, CO₃²⁻, LiHCO₃, NaHCO₃, KHCO₃, and the like.

The diaphragm 50 is provided between the cathode 31 and anode 41 and is stacked with the cathode 31 and anode 41 to form a membrane electrode assembly (MEA). The diaphragm 50 is formed by a material capable of moving ions between the anode 41 and cathode 31 and separating the anode part 40 and cathode part 30, concretely an ion-exchange membrane such as an anion-exchange membrane or cation-exchange membrane, or a porous membrane of organic polymer material. Examples of the ion-exchange membrane used for the diaphragm 50 include, for example, the cation-exchange membranes such as Nafion (registered trademark) and Flemion (registered trademark), and the anion-exchange membranes such as Neosepta (registered trademark), Selemion (registered trademark), Sustenio (registered trademark), and PiperION (registered trademark). The organic polymer materials forming the porous membrane are not limited, but examples include fluorocarbon resins such as Teflon (registered trademark) and polyvinylidene fluoride, hydrocarbon polymers such as polyether, polysulfone, polyethylene, polypropylene, and polyethersulfone, cellulose, and the like.

When the electrolysis cell 20 is assembled using the anode 41, which has large surface unevenness, for example, made of fibrous Ti, and the anode 41 is pressed strongly against the diaphragm 50, which is made of organic material, unevenness in a contact surface between the anode 41 and diaphragm 50 is generated due to the irregularities of the surface 41a of the anode 41. The unevenness includes, for example, in-plane unevenness at a portion that is not exposed to an adhered portion between the anode 41 and diaphragm 50, unevenness in a film-thickness direction caused by thin deformation of the pressed diaphragm 50 at the adhered portion, and unevenness in voltage and current density caused by the unevenness, and the like. Such unevenness promotes partial degradation of the diaphragm 50, leading to long-term thinning of the diaphragm 50 and crossover due to rupture of the diaphragm 50. Here, crossover is a phenomenon in which substances such as a reducible substance, an oxidizable substance, a reduction product, and an oxidation product are unnecessarily moved between the anode part 40 and cathode part 30 through the diaphragm 50, and gases react with each other due to this phenomenon.

Further, the active oxygen species derived from by-product gases are thought to cause damage to the diaphragm 50. In such cases, the rough surface derived from the anode base material with large irregularities is pressed against the diaphragm 50, which accelerates the degradation of the diaphragm 50.

To prevent the above unevenness, it is effective to provide a layer (also called irregularity mitigation layer or intermediate layer) 51 on the surface of the diaphragm 50. The layer 51 can reduce the irregularities of the surface of the anode 41, for example. A thickness of the layer 51 is preferably 1/3 or more of a surface roughness Ra of the surface of the anode 41 and more preferably 1/2 or more so that the irregularities of the anode 41 can be reduced.

The average surface roughness Ra is concretely calculated using an X-ray CT (computed tomography) device, scanning electron microscope (SEM), microscope, laser microscope, or other devices capable of observing images of cross-sections, as well as image analysis software. For example, a cross-sectional image of the anode 41 is obtained using the X-ray CT device (Zeiss, Xradia 620Versa), and a surface roughness curve is obtained using ImageJ (open source image processing software). The roughness curve is partially extracted, and absolute values of deviations from an average line of the extracted portion to the roughness curve are summed, and the average value is set as Ra. A size of the roughness curve to be extracted is, for example, a range of 350 µm along a direction perpendicular to the thickness direction of the anode 41.

The average surface roughness Ra of the surface 41a of the anode 41 is preferably 0.1 µm or more and 50 µm or less. For example, when the average surface roughness Ra exceeds 17.0 µm, the irregularities of the surface 41a are large, and the layer 51 can effectively reduce the irregularities of the surface 41a. The larger the average surface roughness Ra, the more effectively the irregularities of the surface 41a can be reduced by the layer 51. An upper limit of the average surface roughness Ra is preferably, for example, 40 µm or less, and even 30 µm or less. By decreasing the average surface roughness Ra to 17.0 µm or less, the above unevenness can be lowered. When the average surface roughness Ra is 6 µm or less, and even 3 µm or less, the aforementioned unevenness can be further lowered. In this case, the aforementioned unevenness can be prevented and membrane degradation can be inhibited, making the electrolysis cell durable for long-time operation. When this average value is too small, the porous body becomes dense, which is undesirable because the permeation of the electrolytic solution becomes poor, and the electrolysis voltage increases. Therefore, the average surface roughness Ra may be 0.1 µm or more, 0.2 µm or more, or even 0.3 µm or more.

A maximum peak pore size of the layer 51 is preferably 10 nm or more and 50 µm or less, and more preferably 20 nm or more and 10 µm or less. When the pore size is too large, the electrolytic solution present in the anode 41 enters the layer 51 more than necessary and crosses over to the cathode 31 through the diaphragm 50, causing flooding. When the pore size is too small, too little electrolytic solution permeates into the diaphragm 50, causing the diaphragm50 to dry out or, when using the porous membrane, a solution-film formation to be insufficient, resulting in an increase in the electrolysis voltage.

When the diaphragm 50 is the porous membrane, the average pore size of the diaphragm 50 is preferably concretely 10 nm or more and 0.3 µm or less, and more preferably 20 nm or more and 0.2 µm or less. When the average pore size is too small, there is no balance between the supply of the electrolytic solution from the anode 41 and the consumption of water in the electrolytic solution in the diaphragm 50, resulting in drying of the diaphragm 50, causing the crossover when the porous membrane is used, and the increase in the electrolysis voltage when the ion-exchange membrane is used. A relationship among the average pore sizes of the anode 41, diaphragm 50, and layer 51 is preferably such that the average pore size of the layer 51 is smaller than that of the anode 41 and the average pore size of the diaphragm 50 is smaller than that of the layer 51. For example, the smallest average pore size of the diaphragm 50 allows the electrolytic solution to be supplied smoothly and without excessive supply from the anode 41 to the layer 51 and the diaphragm 50. The average pore size of the anode 41 can be measured, for example, by a mercury intrusion method.

A thickness of the layer 51 is preferably 90 µm or less. When the thickness exceeds 90 µm, durability is maintained, but the cell characteristics deteriorate due to higher electrolysis voltage. A lower limit of the thickness of the layer 51 is not limited, but is, for example, 1 µm or more. The thickness of the layer 51 can be checked by the cross-sectional SEM image.

An inorganic material with high environmental resistance is preferred as a main constituent of the layer 51. The layer 51 is porous because the electrolytic solution and gas must permeate it for the reaction. The inorganic material can be selected as a particulate or fibrous aggregate, a porous membrane of the inorganic material, or the like to form the layer 51. Examples of the inorganic material include oxides, nitrides, carbide, carbon (elemental carbon), and the like, which are stable to oxidation and alkali states that fluctuate during electrolysis and are highly resistant to hydrogen peroxide and radicals that may be produced as by-products. Chemical species can be common oxides such as aluminum oxide, zirconium oxide, and silicon oxide, for example, or materials that have an effect on the active oxygen species, as described below.

The inorganic material may be the chemical species (also called quencher or inhibitor) that decompose, capture (retain), or inactivate the active oxygen species produced by the electrolysis device 10, or may contain the chemical species. The chemical species can prevent the degradation of the diaphragm 50. The active oxygen species are highly reactive oxygen species such as hydrogen peroxide, superoxide anion radicals, hydroxyl radicals, and singlet oxygen.

The chemical species may be cerium (Ce), manganese (Mn), cobalt (Co), platinum (Pt), ruthenium (Ru), and tungsten (W), and metals, metal oxides, or metal hydroxides containing at least one element of tin (Sn), iridium (Ir), cesium (Cs), silver (Ag), iron (Fe), aluminum (Al), and titanium (Ti). Preferred examples of metals are Ce, Mn, Co, Pt, Ru, W, or Sn. Particularly preferred examples are Ce, Mn, or Co. Examples of metal oxides include MnO, Mn₃O₄, MnO₂, MnO₃, Mn₂O₇, CoO, Co₂O₃, Co₃O₄, and CeO₂. Examples of metal hydroxides include Mn(OH)₂, MnO(OH), MnO(OH)₂, and Ce(OH)₄. The chemical species can be common oxides such as aluminum oxide, zirconium oxide, and silicon oxide, for example, or cerium oxide, titanium oxide, and manganese oxide.

The decomposition of the active oxygen species is achieved, for example, by converting the active oxygen species to water and oxygen through radical reactions.

The capture of the active oxygen species is achieved, for example, by stable radical compounds or the like, which react with the generated active oxygen species and convert them into inert reactants.

The inactivation of the active oxygen species is achieved, for example, by preventing radicals generated from the active oxygen species.

The active oxygen species, such as hydrogen peroxide, which is one of the degradation factors of the diaphragm 50, easily attack an ether group or a sulfonyl group and degrade the diaphragm 50. Therefore, when the diaphragm 50 contains a polymer compound cross-linked with at least one functional group of ether and sulfonyl groups, there is a great advantage in preventing the degradation of the diaphragm 50 by lowering the average surface roughness of the anode 41.

The layer 51 preferably has the average pore size smaller than the irregularities and average pore size of the surface 41a of the anode 41 to reduce the irregularities of the surface of the anode 41 and to allow good diffusion of the electrolytic solution and gas. For example, the average pore size of the layer 51 is preferably smaller than that of the anode 41. When the average pore size of the layer 51 is smaller than that of the anode 41, the electrolytic solution in the anode 41 does not permeate into the diaphragm 50 more than necessary, flooding due to water moving to the cathode 31 is prevented, and the formation of the three-phase boundary at the cathode catalyst is appropriate, resulting in high reaction selectivity and durability. The average pore size of the layer 51 can be measured, for example, by the mercury intrusion method or gas adsorption method. It is preferable to measure a pore size distribution by the mercury intrusion method, which is less affected by surface conditions. When it is difficult to separate the layer 51 from the diaphragm 50, the average pore size of the layer 51 can be checked from a difference between the average pore size of the entire diaphragm 50 with the layer 51 and the average pore size of the diaphragm 50 only.

The inorganic particles being the constituent are preferably fine, and an average particle diameter is preferably 5 nm or more and 5 µm or less, and further preferably 7 nm or more and 1 µm or less to form the small pore size. Here, particles include not only nearly spherical particles (spherical particles or substantially spherical particles), but also rugby ball-shaped, fibrous, needle-shaped, and other shaped particles, and there are no restrictions on shape. Smaller average particle diameter also increases a specific surface area of the inorganic material, which is effective in decomposing, capturing, or inactivating the generated active oxygen species. Particulate inorganic material can also be fibrous, mixed with inorganic material of different shapes such as fibrous, mixed with a plurality of particles of different diameters or of different compositions, or mixed with organic materials such as binders to bind the inorganic materials together. When mixing organic materials such as binders, a mixing ratio of less than 70 weight percent in the layer 51 is preferred. In other words, the percentage of the inorganic material in the layer 51 is preferably, for example, 30 weight percent or more. When a mixture of organic or other materials that are not the inorganic material is contained in 70 weight percent or more, the function of promoting the decomposition, capture, or inactivation of the active oxygen species may not be sufficient. In this case, a surface of the inorganic material is preferably exposed as much as possible. When particles that are not fibrous or spherical are used for the inorganic material, the above average particle diameter value indicates the fiber diameter or the smaller diameter.

The diaphragm 50 may be formed using the ion-exchange membrane or the porous membrane, but the porous membrane is more effective in installing the layer 51. When the porous membrane is used, the gases produced at both electrodes cross over more easily than the ion-exchange membrane, which is thought to facilitate the production of the active oxygen species, including hydrogen peroxide and radicals. Since the production of the active oxygen species accelerates the degradation of the diaphragm 50, it is effective to provide the layer 51 on the surface of the diaphragm 50 not only to physically protect the diaphragm 50 but also to protect the diaphragm 50 from the active oxygen species by using the inorganic material that can decompose, capture, or inactivate the active oxygen species. In this case, a material supporting a metal such as Pt or Co, or oxide particles that can decompose, capture, or inactivate the active oxygen species may be used as the inorganic material. When using the porous membrane, the inorganic material may permeate into the pores of the diaphragm 50, but the inorganic material can permeate into the pores as long as the pores are not filled and through holes are not lost.

The material used as the diaphragm 50 can be either the ion-exchange membrane or the porous membrane, but the porous membrane has through holes. The through holes in the porous membrane are filled with liquid, such as the anode solution, when the electrolysis cell 20 is in use, and the filled anode solution or the like allows the move of ions. In other words, the porous membrane with through holes functions as the diaphragm 50 capable of moving ions between the anode 41 and cathode 31. Furthermore, the anode 41 and cathode 31 are wet-sealed by filling the inside of the through holes of the porous membrane with the anode solution or the like during the use of the electrolysis cell 20. That is, the gas and liquid flow between the anode part 40 and cathode part 30, and the reaction between gases (crossover) caused by such flow can be prevented.

The porous membrane made of organic polymeric materials for the diaphragm 50, as described above, can be manufactured, for example, as follows. There are various methods of manufacturing the porous organic polymer membrane, including phase separation, melt-quenching, extraction, chemical treatment, stretching, irradiation etching, melting, foaming, composite, fiber hollowing, and other methods, and the manufacturing method is not limited. Among them, a nonsolvent-induced phase separation method (NIPS), in which a uniform film-forming solution of organic polymer dissolved in a solvent is brought into contact with a coagulation liquid containing a nonsolvent to form a concentration gradient between the solvent in the film-forming solution and the nonsolvent in the coagulation liquid, which is a driving force that causes the nonsolvent to replace the solvent in the film-forming solution to proceed a phase separation phenomenon, a manufacturing method utilizing a thermally-induced phase separation phenomenon in which phase separation is induced by cooling a polymer solution dissolved at high temperature to make it porous, or a method in which for such a material likely to become fibers as a fluorocarbon resin, fine pores are provided in the membrane by applying shear force, or other methods can be selected. The above methods can also be combined to obtain a predetermined porous structure. The inorganic material can be compounded with the above membrane, or a coating can be applied to the surface to control hydrophilic properties. A plurality of membranes may be superimposed.

The CO₂ gas supplied to the cathode flow path 32 may be supplied in a dry state, but a humidified state is preferable. When the porous membrane of the organic polymer material is applied to the diaphragm 50, the use of the CO₂ gas in the humidified state facilitates the formation of a wet seal on the porous membrane of the organic polymer material. The wet seal prevents the crossover between the anode part 40 and cathode part 30, as described above. The gas supply part 60 may be equipped with a humidifying part that humidifies the CO₂ gas flowing through the gas pipe 63 to humidify the CO₂ gas. The humidifying part (humidifying device) is, for example, equipped with a humidification water tank and is configured to humidify the CO₂ gas by vaporizing humidification water using an ultrasonic oscillator or the like. Further, the CO₂ gas may be humidified by being bubbled in the humidification water tank and passed therethrough.

Next, an operation of the carbon dioxide electrolysis device 10 illustrated in FIG. 1 will be described. Here, a case of producing carbon monoxide (CO) as the carbon compound is mainly described. However, the carbon compound as the reduction product of carbon dioxide is not limited to carbon monoxide, and may be methane (CH₄), ethane (C₂H₆), ethylene (C₂H₄), methanol (CH₃OH), ethanol (C₂H₅OH), ethylene glycol (C₂H₆O₂), or the like, and moreover, carbon monoxide that is the reduction product may be further reduced to produce the above-described organic compounds.

First, the reaction process when water (H₂O) is oxidized mainly to produce hydrogen ions (H⁺) is described. When current is supplied from the power source 80 between the anode 41 and cathode 31, the oxidation reaction of water (H₂O) occurs in the anode 41, with which the anode solution is brought into contact. Concretely, as expressed in Formula (1) below, H₂O contained in the anode solution is oxidized, and oxygen (O₂) and hydrogen ions (H⁺) are produced.

2H₂O → 4H⁺ + O₂ + 4e⁻ ... (1)

H⁺ produced in the anode 41 moves in the electrolytic solution present in the anode 41 and the diaphragm 50 to reach near the cathode 31. The reduction reaction of carbon dioxide (CO₂) occurs by using electrons (e⁻) based on the current supplied from the power source 80 to the cathode 31 and H⁺ moved near the cathode 31. Concretely, as expressed in Formula (2) below, CO₂ supplied from the cathode flow path 32 to the cathode 31 is reduced to produce CO. Further, as expressed in Formula (3) below, hydrogen ions (H⁺) receive electrons, thereby producing hydrogen. At this time, hydrogen may be produced simultaneously with the production of carbon monoxide.

2CO₂ + 4H⁺ + 4e⁻ → 2CO + 2H₂O ... (2)

2H⁺ + 2e⁻ → H₂ ... (3)

Next, the reaction process when carbon dioxide (CO₂) is reduced mainly to produce hydroxide ions (OH⁻) is described. When current is supplied from the power source 80 between the anode 41 and cathode 31, as expressed in Formula (4) below, water (H₂O) and carbon dioxide (CO₂) are reduced to produce carbon monoxide (CO) and hydroxide ions (OH⁻) near the cathode 31. Further, as expressed in Formula (5) below, water receives electrons, thereby producing hydrogen. At this time, hydrogen may be produced simultaneously with the production of carbon monoxide. The hydroxide ions (OH⁻) produced by these reactions diffuse near the anode 41, and as expressed in Formula (6) below, the hydroxide ions (OH⁻) are oxidized to produce oxygen (O₂).

2CO₂ + 2H₂O + 4e⁻ → 2CO + 4OH⁻ ... (4)

2H₂O + 2e⁻ → H₂ + 2OH⁻ ... (5)

4OH⁻ → 2H₂O + O₂ +4e⁻ ... (6)

The carbon dioxide electrolysis device 10 of the arrangement as described above is not only specialized in only the reduction of carbon dioxide, but also, for example, can produce carbon monoxide and hydrogen at 1:2, and produce a carbon dioxide reduction product and hydrogen at such an optional ratio as to produce methanol in a chemical reaction thereafter. Hydrogen is a material that is inexpensive and easy to obtain through the electrolysis of water and from fossil fuel, and thus a ratio of hydrogen is not required to be large. A ratio of carbon monoxide to hydrogen is at least 1 or more, and desirably 1.5 or more, from these viewpoints, which is preferable from economical and environmental viewpoints.

As described above, according to the carbon dioxide electrolysis device 10 of the arrangement, the unevenness of the diaphragm 50 formed by pressing the surface unevenness of the anode 41 against the surface of the diaphragm 50 can be reduced by providing the layer 51 on the surface of the membrane used as the diaphragm 50. This allows, for example, uniform contact of the anode 41 with the diaphragm 50 and preventes the degradation of the diaphragm 50 during operation of the electrolysis cell 20. Thus, the carbon dioxide electrolysis device 10 can be stably operated over a long period of time.

Not only in the carbon dioxide electrolysis device described above, but also in electrolysis devices that perform ammonia synthesis from nitrogen and water electrolysis, fuel cells, and the like, the active oxygen species derived from by-product gases are thought to cause damage to the diaphragm 50. In such cases, the rough surface derived from the anode base material with large irregularities is pressed against the diaphragm 50, which accelerates the degradation of the diaphragm 50. The installation of the layer 51 is particularly effective in the case of carbon dioxide electrolysis and nitrogen electrolysis, because the overvoltage is high at the anode 41 and cathode 31, and hydrogen generation and oxygen generation by side reactions easily produce the active oxygen species such as hydrogen peroxide and radicals.

### EXAMPLES

Next, examples and evaluation results thereof will be described.

### (Examples 1, 2, Comparative Examples 1, 2)

As composing materials of a cathode catalyst layer, catalytic particles, which are carbon particles supporting Au nanoparticles (metal catalyst) with an average diameter of 2 nm, and a Nafion solution (trade name, DuPont) as an ion-conductive material (ion-exchange resin) were prepared. The composing materials, pure water, and isopropanol were mixed at a predetermined ratio to prepare a catalyst-coating solution.

A sheet of carbon paper with a diffusion layer having a microporous layer was prepared as a cathode base material. A spray nozzle was filled with the above-described catalyst-coating solution, which was sprayed on the sheet of carbon paper placed on a heated hot plate, and spray coating was performed. A mass of the metal catalyst per unit area of the catalyst layer was set to 0.3 mg/cm². The resultant was cut into a size of 4 × 4 cm to serve as a cathode (electrode area: 16 cm²).

An anode was an electrode with IrO₂ nanoparticles serving as a catalyst coated on a Ti nonwoven fabric. The IrO₂/Ti nonwoven fabric was cut into 4 × 4 cm pieces to serve as the anode (electrode area: 16 cm²).

A porous membrane was used for a diaphragm. An irregularity mitigation layer provided on a surface of the above porous membrane was formed by mixing inorganic particles, binder, and solvent listed in Table 1 in a ball mill, then coating and drying the mixture on a surface of the porous membrane.

**[Table 1]**

| | Diaphragm | Irregularity mitigation layer | | | |
|---|---|---|---|---|---|
| | | Composition of inorganic particles | Average particle diameter of inorganic materials [nm] | Average pore size | Thickness [µm] |
| Example 1 | Porous membrane | Cerium oxide | 100 | Smaller than anode average pore size | 20 |
| Example 2 | Porous membrane | Cerium oxide | 10 | Smaller than anode average pore size | 10 |
| Comparative Example 1 | Porous membrane | None | None | None | None |
| Comparative Example 2 | Porous membrane | Aluminum oxide | 10000 | Larger than anode average pore size | 100 |

Further, an electrolysis cell was fabricated. A cathode current collector, a cathode gas flow path, the cathode, the diaphragm, the irregularity mitigation layer, the anode, an anode solution flow path, and an anode current collector were stacked in that order from the top, and sandwiched by support plates, and further tightened with bolts to fabricate the electrolysis cell. The anode current collector and the cathode current collector were connected to an external power source, an electrolytic solution was made to flow through the anode solution flow path, and CO₂ gas was made to flow through the cathode gas flow path to fabricate the carbon dioxide electrolysis device illustrated in FIG. 1.

Next, the electrolysis devices of Examples 1 and 2 and Comparative Examples 1 and 2 were operated under the following conditions. A predetermined amount of humidified CO₂ gas was supplied to the cathode gas flow path, and an electrolytic solution (aqueous sodium hydrogen carbonate solution with a concentration of 0.1 M) was supplied to the anode solution flow path. A constant current of 200 mA/cm² was continuously applied between the anode and cathode until the diaphragm degraded and Faraday characteristics of produced gas, CO, decreased. The time to an inflection point where CO Faraday efficiency could no longer be maintained was defined as the degradation time. Table 2 shows how many times the operating time of the electrolysis cell in each example was extended, taking the operating time until the degradation of the diaphragm in Comparative Example 1, in which no irregularity mitigation layer was provided, as 1.

**[Table 2]**

| | Degradation time [times] |
|---|---|
| Example 1 | 3 |
| Example 2 | 7 |
| Comparative Example 1 | 1 |
| Comparative Example 2 | - |

As shown in Table 2, in the electrolysis cells of Examples 1 and 2, where the irregularity mitigation layers were provided, the operating time until the diaphragm degraded increased, and durability of the diaphragm was improved compared to the electrolysis cell of Comparative Example 1, where no irregularity mitigation layer was provided. In the case of the irregularity mitigation layer with an average pore size larger than the anode average pore size and a thickness of 100 µm, as in Comparative Example 2, an electrolysis voltage was high and operation could not be performed under the specified conditions.

Note that the configurations of the above-described arrangements are applicable in combination. Further, parts thereof are replaceable. While certain arrangements of the present invention have been described above, these arrangements have been presented by way of example only and are not intended to limit the scope of the invention. Indeed, the arrangements described herein may be embodied in a variety of other forms; furthermore, various omissions, substitutions, and changes in the form of the arrangements described herein may be made without departing from the spirit of the inventions. The accompanying claims and their equivalents are intended to cover such arrangements or modifications as would fall within the scope and spirit of the inventions.

The above-described arrangements can be summarized into the following clauses.

### (Clause 1)

A membrane electrode assembly including:
a cathode that is arranged to be in contact with a reducible substance and reduces the reducible substance;
an anode that is arranged to be in contact with an electrolytic solution containing an oxidizable substance and oxidizes the oxidizable substance;
a diaphragm separating the cathode and the anode; and
a layer that is provided between the anode and the diaphragm, has an inorganic material, and reduces a surface unevenness of the anode, wherein
an average pore size of the layer is smaller than an average pore size of the anode.

### (Clause 2)

The membrane electrode assembly according to clause 1, wherein
a thickness of the layer is 1/3 or more of an average surface roughness Ra of a surface of the anode.

### (Clause 3)

The membrane electrode assembly according to clause 1 or 2, wherein
the thickness of the layer is 90 µm or less.

### (Clause 4)

The membrane electrode assembly according to any one of clauses 1 to 3, wherein
the inorganic material includes inorganic particles having an average particle diameter of 5 nm or more and 5 µm or less.

### (Clause 5)

The membrane electrode assembly according to any one of clauses 1 to 4, wherein
a percentage of the inorganic material in the layer is 30 weight percent or more.

### (Clause 6)

The membrane electrode assembly according to any one of clauses 1 to 5, wherein
the inorganic material contains chemical species that decompose, capture, or inactivate active oxygen species.

### (Clause 7)

The membrane electrode assembly according to any one of clauses 1 to 6, wherein
the inorganic material includes at least one oxide selected from the group consisting of aluminum oxide, titanium oxide, zirconium oxide, cerium oxide, silicon oxide, and manganese oxide.

### (Clause 8)

The membrane electrode assembly according to any one of clauses 1 to 7, wherein
the diaphragm is a porous membrane.

### (Clause 9)

The membrane electrode assembly according to clause 8, wherein
an average pore size of the layer is larger than an average pore size of the porous membrane.

### (Clause 10)

The membrane electrode assembly according to any one of clauses 1 to 9, wherein
an average surface roughness Ra of a surface of the anode is 0.1 µm or more and 50 µm or less.

### (Clause 11)

The membrane electrode assembly according to any one of clauses 1 to 9, wherein
an average surface roughness Ra of a surface of the anode is larger than 17.0 µm.

### (Clause 12)

The membrane electrode assembly according to any one of clauses 1 to 9, wherein
an average surface roughness Ra of a surface of the anode is 17.0 µm or less.

### (Clause 13)

The membrane electrode assembly according to any one of clauses 1 to 12, wherein
the reducible substance is gaseous.

### (Clause 14)

The membrane electrode assembly according to clause 13, wherein
the reducible substance is carbon dioxide or nitrogen.

### (Clause 15)

An electrolysis cell including
the membrane electrode assembly according to any one of claims 1 to 14;
a cathode part that has a cathode flow path configured to supply a raw material containing the reducible substance to the cathode; and
an anode part that has an anode flow path configured to supply the electrolytic solution to the anode.

### (Clause 16)

An electrolysis device including:
the electrolysis cell according to clause 15;
a gas supply part that supplies the raw material to the cathode flow path; and
an electrolytic solution supply part that supplies the electrolytic solution to the anode flow path.

## Claims

1. A membrane electrode assembly comprising:
a cathode that is arranged to be in contact with a reducible substance and reduces the reducible substance;
an anode that is arranged to be in contact with an electrolytic solution containing an oxidizable substance and oxidizes the oxidizable substance;
a diaphragm separating the cathode and the anode; and
a layer that is provided between the anode and the diaphragm, has an inorganic material, and reduces a surface unevenness of the anode, wherein
an average pore size of the layer is smaller than an average pore size of the anode.

2. The membrane electrode assembly according to claim 1, wherein
a thickness of the layer is 1/3 or more of an average surface roughness Ra of a surface of the anode.

3. The membrane electrode assembly according to claim 1 or 2, wherein
the thickness of the layer is 90 µm or less.

4. The membrane electrode assembly according to any one of claims 1 to 3, wherein
the inorganic material includes inorganic particles having an average particle diameter of 5 nm or more and 5 µm or less.

5. The membrane electrode assembly according to claim 1 any one of claims 1 to 4, wherein
a percentage of the inorganic material in the layer is 30 weight percent or more.

6. The membrane electrode assembly according to any one of claims 1 to 5, wherein
the inorganic material contains chemical species that decompose, capture, or inactivate active oxygen species.

7. The membrane electrode assembly according to any one of claims 1 to 6, wherein
the inorganic material includes at least one oxide selected from the group consisting of aluminum oxide, titanium oxide, zirconium oxide, cerium oxide, silicon oxide, and manganese oxide.

8. The membrane electrode assembly according to any one of claims 1 to 7, wherein
the diaphragm is a porous membrane.

9. The membrane electrode assembly according to claim 8, wherein
an average pore size of the layer is larger than an average pore size of the porous membrane.

10. The membrane electrode assembly according to any one of claims 1 to 9, wherein
an average surface roughness Ra of a surface of the anode is 0.1 µm or more and 50 µm or less.

11. The membrane electrode assembly according to any one of claims 1 to 9, wherein
an average surface roughness Ra of a surface of the anode is larger than 17.0 µm.

12. The membrane electrode assembly according to any one of claims 1 to 9, wherein
an average surface roughness Ra of a surface of the anode is 17.0 µm or less.

13. The membrane electrode assembly according to claim 1, wherein
the reducible substance is carbon dioxide or nitrogen.

14. An electrolysis cell comprising:
the membrane electrode assembly according to any one of claims 1 to 13;
a cathode part that has a cathode flow path configured to supply a raw material containing the reducible substance to the cathode; and
an anode part that has an anode flow path configured to supply the electrolytic solution to the anode.

15. An electrolysis device comprising:
the electrolysis cell according to claim 14;
a gas supply part that supplies the raw material to the cathode flow path; and
an electrolytic solution supply part that supplies the electrolytic solution to the anode flow path.
